# EUROPEAN PATENT APPLICATION

(11) **EP 1 308 088 A2**
(43) Date of publication of application: **07.05.2003**
(21) Application number: 02024534.6
(22) Date of filing: 31.10.2002
(51) Int. Cl.: A01K 31/17

(54) **Coop for laying hens farming provided with a litter for scratching about and pecking**

(30) Priority: 05.11.2001 IT TO20011046
(71) Applicant: Valli International s.r.l., 47010 Galeata (FC) (IT)
(72) Inventor: Maltoni, Giuliano, 47010 Galeata (FC) (IT)
(74) Representative: Robba, Pierpaolo

(57) **Abstract**

A coop (2) for laying hens farming comprises a litter for scratching about and pecking constituted by a plate (14) for distributing litter material, a vertical tube (12) arranged below the distribution plate (14) for the falling of the litter material, and a litter plane (4), constituted of abrasive material, arranged below a bottom grid (6) of the coop in correspondence with a lower opening (16) of the vertical tube (12) for the falling of the litter material.

## Description

The present invention concerns a coop for laying hens farming provided with a litter for scratching about and pecking. In particular, the invention concerns a litter allowing the hens to peck for cleaning and shortening their beak and at the same time to scratch about for shortening their claws.

In the avicultural breeding, it is known the use of batteries of multistage coops in which the animals feed and lay eggs.

For allowing the animals to shorten their claws and their beak, which in case of free range breeding occurs by nature, it is necessary to provide the coops with suitable litters in which the hens can scratch around and rub their beak.

A very simple model of litter consists in a box with raised edges, filled with sand or other partially abrasive material and arranged at the level of the coop floor or above the laying nest. However, the hens tend to mistake this type of litter for a laying nest, and the laid eggs can be recovered only by picking them up by hand. Besides, the box must be periodically removed for its cleaning.

A further problem of the litters of known type is connected with the distribution of litter material, sand or sawdust, which occurs manually or with the help of transport and descent tubes up to the litter zone. In the first case, it is evident the drawback connected with the management costs, while excessive quantities of material are needed in the second case.

Another known solution consists in positioning a synthetic grass mat above the floor grid of the coop. Although this solution helps the hens to scratch about, it does not allow them to shorten their claws and their beak.

Therefore it is a first object of the present invention to realise a coop for laying hens farming provided with a litter for scratching about and pecking able to allow the hens to shorten their claws and their beak in a safe and effective manner, while assuring an easy cleaning and maintenance of the litter itself.

A further object of the present invention is to realise a litter that can not be mistaken for a laying nest, and that at the same time helps possible eggs laid on the litter to roll towards the conveyor belt arranged for their transport.

This and other objects of the invention are obtained by the coop for laying hens farming realised according to the invention, as claimed in the hereby attached claims.

The coop for laying hens farming manufactured according to the invention can be advantageously used in avicultural breeding of whatever type, with batteries of coops having one or more stages.

The above and other objects of the present invention will be more clear from the description of a preferred embodiment with reference to the hereby attached figures, in which:
- Figure 1 is a front view of a multistage coop for laying hens farming, provided with a litter for scratching about and pecking, realised according to the present invention;
- Figure 2 is a sectional view of three different zones of the coop of Figure 1; and
- Figure 3 is a top view of the interior of the coop of Figure 1.

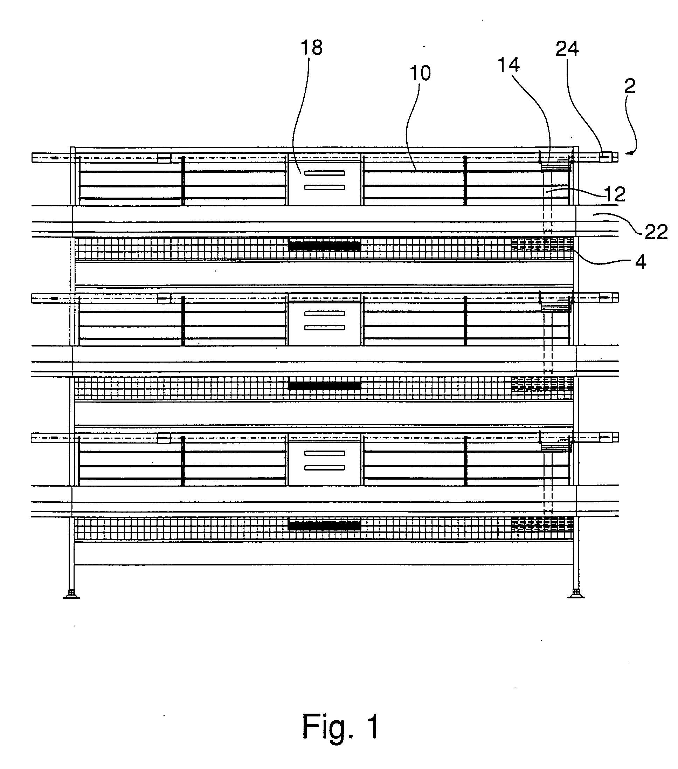

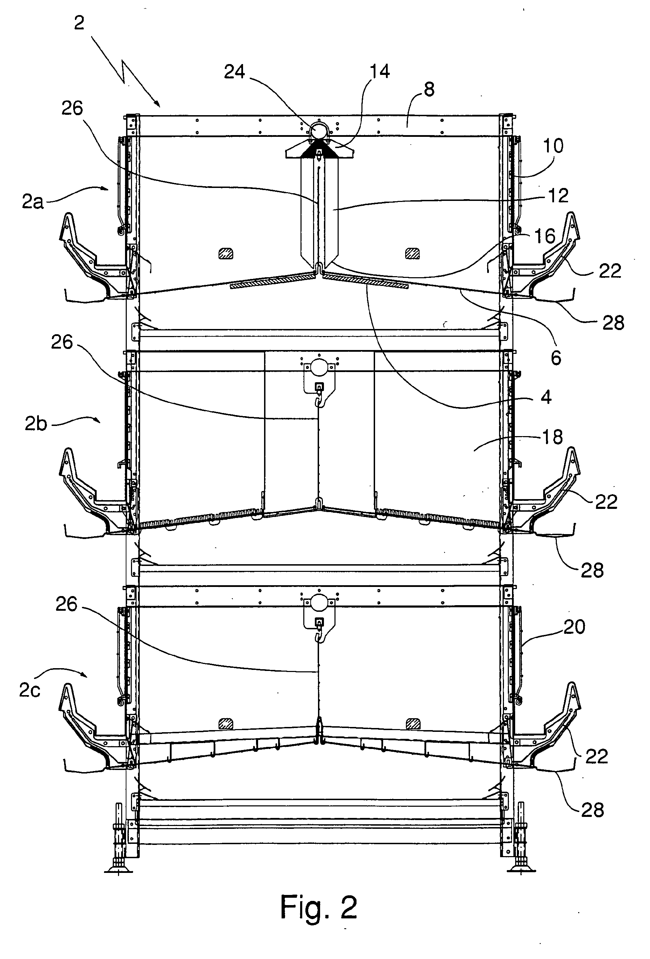

With reference to the Figures 1 and 2, a structure 2 for laying hens farming is composed by three coops 2a, 2b, 2c put one on another. Since the coops are identical between them, it will be now described in detail only the upper coop 2a.

The coop 2a, which is provided with a litter for scratching about and pecking, essentially comprises a bottom grid 6, realised with an electrowelded net having rectangular meshes, a roof 8 and side walls 10 defining an internal space freely accessible to the animals therein bred.

The coop is subdivided into two equal and symmetrical internal volumes, each of them being provided with a litter and with a nest 18 for laying eggs, thanks to a separating wall obtained with a net 26.

A trough 22 and an egg conveyor belt 28 are present laterally, on each side of the coop.

Figure 2 shows in detail a section of three different zones of the coops put one on the other and realised according to the invention. In particular, from above downwards, it may be seen the litter zone, which will be described in detail in the following, the laying nest zone, and a free zone of the coop.

The litter for scratching about and pecking essentially comprises: a plate 14 for distributing the litter material, said plate 14 being arranged in the top part of the coop and close to the roof 8; a vertical tube 12 arranged below said distribution plate 14 for the falling of the litter material exiting the plate 14; and a litter plane 4, constituted of abrasive material, arranged below the bottom grid 6 of the coop and in correspondence with an outlet opening 16 of the vertical tube 12.

The distribution plate 14 is fed by a tube 24 for conveying the litter material passing horizontally inside the coop and close to the roof 8. The transport tube can be for instance of the spiral type, of the chain type, or of the cord type with discs.

The hens themselves, pecking in the distribution plate 14, will make the litter material to fall into the vertical tube 12 and, as a consequence, onto the litter plane 4. Said material could be for instance sawdust or a mixture of sand and sawdust or whatever other similar material suitable to the purpose.

For allowing the hens to shorten their beak, the distribution plate 14 can be advantageously provided with an abrasive surface obtained for instance by means of a rough tile made of stone or fired brick or similar material.

The litter plane 4, which is also constituted of abrasive material, for instance a tile made of stone, fired brick or similar material, allows the hens to scratch around and to peck, while at the same time to shorten their claws and their beak.

Since the bottom grid 6 of the coop is above the litter plane 4, it prevents that the hens excessively rub on the rough surface, allowing at the same time possible eggs to roll on the egg collection belt 28.

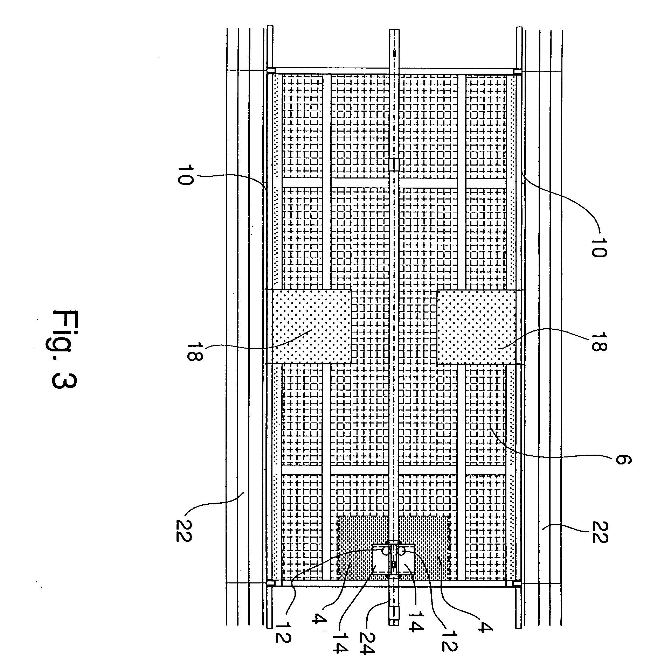

Figure 3 shows the interior of the coop 2a in a top view, where it may be seen in particular the bottom grid 6, the side walls 10 delimiting the coop, the tube 24 for conveying the litter material, the distribution plate 14, the vertical tube 12 and the litter plane 4. The two troughs 22 may be seen laterally to the coop.

The litter system incorporated in the previously described coop offers a number of advantages:
- the litter zone needs not to be manually cleaned;
- while the hens peck on the distribution plate and on the litter plane, they shorten their beak;
- while the hens scratch about, they shorten their claws on the abrasive plane;
- the bottom grid prevents that the litter material is excessively scattered and helps the laid eggs to roll towards the conveying belt;
- hens do not find in the litter an environment so comfortable or secluded to mistake it for a laying nest.

## Claims

1. Coop (2) for laying hens farming provided with a litter for scratching about and pecking, said coop comprising a bottom grid (6), a roof (8) and a plurality of side walls (10), **characterised by** the fact that said litter comprises:
- a plate (14) for distributing litter material;
- a substantially vertical tube (12), arranged below said distribution plate (14), for the falling of the litter material exiting said distribution plate (14);
- a litter plane (4), constituted of abrasive material, arranged in correspondence with a lower opening (16) of said vertical tube (12) for collecting said litter material.

2. Coop according to claim 1, wherein said plate (14) for distributing litter material is arranged in the top part of the coop, close to the roof (8).

3. Coop according to claim 1, wherein said plate (14) for distributing litter material presents an abrasive surface for allowing the hen to rub its beak.

4. Coop according to claim 3, wherein said abrasive surface is obtained by means of a rough tile lowerly fixed to the distribution plate (14).

5. Coop according to claim 1, wherein said litter plane (4) is arranged below said bottom grid (6) of the coop.

6. Coop according to claim 5, wherein said litter plane (4) is obtained by means of a rough tile.

7. Coop according to claim 4 or 6, wherein said tile is a tile made of stone.

8. Coop according to claim 4 or 6, wherein said tile is a tile made of fired brick.

9. Coop according to claim 1, wherein said plate (14) for distributing litter material is fed by a transport tube (24) passing horizontally inside the coop.

10. Coop according to anyone of the preceding claims, wherein said litter material is sawdust, sand, a mixture of sawdust and sand or similar materials.
